# EUROPEAN PATENT APPLICATION

(11) **EP 2 525 588 A1**
(43) Date of publication of application: **21.11.2012**
(21) Application number: 12167736.3
(22) Date of filing: 11.05.2012
(51) Int. Cl.: H04N 21/81, H04N 21/234, H04N 21/2343, H04N 21/442, H04N 21/482, H04N 13/02

(54) **Apparatus and method for providing 3D content**

(30) Priority: 19.05.2011 KR 20110047091
(71) Applicant: Samsung Electronics Co., Ltd., Suwon-si, Gyeonggi-do, 443-742 (KR)
(72) Inventor: Roh, Joung-ho, Gyeonggi-do (KR)
(74) Representative: Davies, Robert Ean

(57) **Abstract**

An apparatus and method for providing three-dimensional (3D) contents are provided. The 3D content providing method executed by a 3D content providing apparatus includes: acquiring first 3D contents and second 3D contents generated by two-dimensional (2D) to 3D conversion; transmitting product information of the first 3D contents and the second 3D contents to a user terminal; receiving a content offer request from the user terminal; and sending the user terminal 3D contents selected between the first 3D contents and the second 3D contents in response to the content offer request, the first 3D contents and the second 3D contents being generated by different combination proportions of a manual process and an automatic process for the 2D to 3D conversion.

## Description

### BACKGROUND

### 1. Field

Apparatuses and methods consistent with the exemplary embodiments relate to an apparatus and method for providing three-dimensional (3D) contents, and more particularly to an apparatus and method for providing 3D contents converted from 2D contents.

### 2. Description of the Related Art

Video contents such as movies, dramas, sports, etc. (hereinafter, referred to as "contents") are reproduced in a television, a personal computer, a smart phone, a smart pad, a portable multimedia player (PMP), an MP3 player, or a similar display apparatus capable of reproducing contents.

With recent development of display technology for a 3D image, such contents have been made into 3D contents and reproduced by a display apparatus capable of displaying a 3D image.

However, as of yet there, high quality 3D contents are prevalent in the market since a large scale apparatus and development manpower are needed, and high costs and time are needed in order to make such 3D contents.

### SUMMARY

Accordingly, one or more exemplary embodiments provide an apparatus and method for providing high quality 3D contents at low cost.

One or more exemplary embodiments also provide an apparatus and method for providing 3D contents, which can promote the content industry and the display industry with an offer of 3D contents.

According to an aspect of an exemplary embodiment, there is provided a 3D content providing method executed by a 3D content providing apparatus, the method including: acquiring first 3D contents and second 3D contents generated by two-dimensional (2D)-3D conversion; transmitting product information of the first 3D contents and product information of the second 3D contents to a user terminal; receiving a content offer request from the user terminal; and sending to the user terminal a selected one of the first 3D contents and the second 3D contents in response to the content offer request, the first 3D contents and the second 3D contents are generated by different combination proportions of a manual process and an automatic process during the 2D-3D conversion.

The product information of each of the first 3D contents and the second 3D contents may include price information.

The product information of each of the first 3D contents and the second 3D contents may include 3D-related quality information.

The sending the user terminal may include sending 3D contents through a video on demand (VOD) service.

The combination proportion may be determined based on content attributes of the first 3D contents and the second 3D contents.

The combination proportion may be determined based on content genres of the first and second contents.

The combination proportion may be determined based on 3D-related quality information of the first 3D contents and the second 3D contents.

The combination proportion may be determined based on 3D-related quality information received from the user terminal.

The content offer request may include price information selected from the product information.

The content offer request may include 3D-related quality information selected from the product information.

According to an aspect of another exemplary embodiment, there is provided a 3D content providing apparatus including: a communication unit which communicates with a 2D content providing apparatus and a user terminal; a converter which converts 2D contents including a plurality of frames which constitute video contents to be displayed on the user terminal into 3D contents; and a controller which controls the 2D contents received from the 2D content providing apparatus to be converted into the 3D contents, and controls the converted 3D contents to be transmitted to the user terminal.

The converter may perform a plurality of converting processes to convert the 2D contents into 3D contents, and at least one of the plurality of converting processes may include a manual process performed according to user input and an automatic process performed by preset reference information.

The converter may perform a converting process to a portion of frames selected among the plurality of frames, and performs a converting process to another frame selected among the plurality of frames based on the performed converting process.

The controller may determine quality of the 3D contents to be converted, and control the converting of the 2D contents into the 3D contents in accordance with the determined quality of the 3D contents.

The controller may determine the quality of 3D contents to be converted, in based on a type of 2D contents.

The controller may determine the quality of 3D contents to be converted, based on a request defining the quality provided by a user of the user terminal.

The controller may control the 2D contents, which are requested by a user to be converted to the 3D contents, to be converted.

According to an aspect of another exemplary embodiment, there is provided a 3D content providing method executed by a 3D content providing apparatus, the method including: receiving 2D contents including a plurality of frames as video contents from a 2D content providing apparatus; converting the received 2D contents into 3D contents; and transmitting the converted 3D contents to a user terminal.

The converting may include performing a plurality of converting processes to convert the 2D contents into 3D contents, and at least one of the plurality of converting processes may include a manual process performed according to user input and an automatic process performed by preset reference information.

The converting may include performing a converting process to a portion of frames selected among the plurality of frames; and performing a converting process to another frame selected among the plurality of frames on the basis of the performed converting process.

The method may further include determining quality of the 3D contents to be converted, wherein the converting includes converting the 2D contents into the 3D contents in accordance with the determined quality of the 3D contents.

The determining may include determining the quality of 3D contents to be converted, in accordance with the type of 2D contents.

The determining may include determining the quality of 3D contents to be converted, based on a request defining the quality provided by a user of the user terminal.

The method may further include determining 2D contents to be converted, based on a request identifying the 2D contents provided by a user of the user terminal.

According to an aspect of another exemplary embodiment, there is provided a 3D content providing apparatus including: a communication unit which communicates with a 2D content providing apparatus, a content converting apparatus and a user terminal; a storage which stores 3D contents converted from 2D contents including a plurality of frames as video contents to be displayed on the user terminal; and a controller which transmits the 2D contents from the 2D content providing apparatus to the content converting apparatus, receives the 3D contents converted from the 2D contents from the content converting apparatus, and controls the received 3D contents to be transmitted to the user terminal.

The controller may determine quality of the 3D contents to be converted, and request the content converting apparatus to convert the 2D contents into the 3D contents in accordance with the determined quality of 3D contents.

The controller may determine the quality of 3D contents to be converted, in accordance with the type of 2D contents.

The controller may determine the quality of 3D contents to be converted, based on a request defining the quality provided by a user of the user terminal.

The controller may control the 2D contents, which are requested by a user to be converted to the 3D contents, to be converted.

According to an aspect of another exemplary embodiment, there is provided a 3D content providing method executed by a 3D content providing apparatus, the method including: receiving 2D contents including a plurality of frames as video contents from a 2D content providing apparatus; transmitting the received 2D contents to a content converting apparatus; receiving 3D contents converted from the 2D contents by the content converting apparatus from the content converting apparatus; and transmitting the received 3D contents to a user terminal.

The method may further include determining quality of the 3D contents to be converted; and requesting the content converting apparatus to convert the 2D contents into the 3D contents in accordance with the determined quality of 3D contents.

The determining may include determining the quality of 3D contents to be converted, on the basis of the type of 2D contents.

The determining may include determining the quality of 3D contents to be converted, based on a request defining the quality provided by a user of the user terminal.

The method may further include determining 2D contents to be converted, based on a request identifying the 2D contents provided by a user of the user terminal.

According to an aspect of another exemplary embodiment, there is provided a 3D content providing apparatus including: a communication unit which communicates with a user terminal; a converter which converts 2D contents, including a plurality of frames which constitute video contents to be displayed on the user terminal, into 3D contents; and a controller which determines the 2D contents to be converted, based on a request identifying the 2D contents provided by a user of the user terminal, controls the determined 2D contents to be converted into the 3D contents, and controls the converted 3D contents to be transmitted to the user terminal.

The controller may determine quality of the 3D contents to be converted, as requested by a user of the user terminal, and control the 2D contents to be converted into the 3D contents in accordance with the determined quality of 3D contents.

According to an aspect of another exemplary embodiment, there is provided a 3D content providing method executed by a 3D content providing apparatus, the method including: determining 2D contents to be converted as requested by a user of a user terminal which constitute video contents including a plurality of frames to be displayed on the user terminal; converting the determined 2D contents into the 3D contents; and transmitting the converted 3D contents to the user terminal.

The converting may include determining quality of the 3D contents as requested by a user of the user terminal; and converting the 2D contents into the 3D contents in accordance with the determined quality of 3D contents.

According to an aspect of another exemplary embodiment, there is provided a 3D content providing apparatus including: a communication unit which communicates with a content converting apparatus and a user terminal; a storage which stores 3D contents converted from 3D contents including a plurality of frames as video contents to be displayed on the user terminal; and a controller which determines the 2D contents to be converted, as requested by a user of the user terminal, requests the content converting apparatus to convert the determined 2D contents into the 3D contents, receives the converted 3D contents from the content converting apparatus, and controls the received 3D contents to be transmitted to the user terminal.

The controller may determine quality of the 3D contents as requested by a user of the user terminal, and control the 2D contents to be converted into the 3D contents in accordance with the determined quality of 3D contents.

According to an aspect of another exemplary embodiment, there is provided a 3D content providing method executed by a 3D content providing apparatus, the method including: determining two-dimensional (2D) contents to be converted into 3D contents as requested by a user of a user terminal, the 2D contents comprising a plurality of frames constituting video contents to be displayed on the user terminal; requesting the content converting apparatus to convert the determined 2D contents into the 3D contents; receiving the 3D contents converted from the 2D contents from the content converting apparatus; and transmitting the received 3D contents to the user terminal.

The method may further include determining quality of the 3D contents as requested by a user of the user terminal, wherein the requesting includes requesting the content converting apparatus to convert the 2D contents into the 3D contents in accordance with the determined quality of 3D contents.

According to an aspect of another exemplary embodiment, there is provided a 3D content providing apparatus including: a communication unit which communicates with a user terminal; a converter which converts 2D contents, including a plurality of frames which constitute video contents to be displayed on the user terminal, into 3D contents; and a controller which determines quality of 3D contents, converts the 2D contents into the 3D contents in accordance with the determined quality of 3D contents, and controls the converted 3D contents to be transmitted to the user terminal.

The controller may determine the quality of the 3D contents to be converted, in accordance with the type of 2D contents.

According to an aspect of another exemplary embodiment, there is provided a 3D content providing method executed by a 3D content providing apparatus, the method including: determining a quality of 3D contents to be converted from 2D contents including a plurality of frames which constitute video contents to be displayed on a user terminal; converting the 2D contents into the 3D contents in accordance with the determined quality of the 3D contents; and transmitting the converted 3D contents to the user terminal.

The determining may include determining the quality of 3D contents to be converted, in accordance with the kinds of 2D contents.

According to an aspect of another exemplary embodiment, there is provided a 3D content providing apparatus including: a communication unit which communicates with a content converting apparatus and a user terminal; a storage which stores 3D contents converted from 3D contents including a plurality of frames as video contents to be displayed on the user terminal; and a controller which determines the 3D contents to be converted, requests the content converting apparatus to convert the 2D contents into the 3D contents, receives the converted 3D contents from the content converting apparatus, and controls the received 3D contents to be transmitted to the user terminal.

The controller may determine the quality of 3D contents to be converted, in accordance with the type of 2D contents.

According to an aspect of another exemplary embodiment, there is provided a 3D content providing method executed by a 3D content providing apparatus, the method including: determining quality of 3D contents to be converted from 2D contents including a plurality of frames which constitute video contents to be displayed on a user terminal; requesting the content converting apparatus to convert the 2D contents into the 3D contents in accordance with the determined quality of 3D contents; receiving the converted 3D contents from the content converting apparatus; and transmitting the received 3D contents to the user terminal.

The determining may include determining the quality of 3D contents to be converted, in accordance with the type of 2D contents.

According to an aspect of an exemplary embodiment, there is provided a 3D content providing method using a 3D content providing apparatus, the method including displaying information of a plurality of contents transmitted by the 3D content providing apparatus, to a user terminal; selecting one of the plurality of contents by a user's input through the user terminal; displaying on the user terminal 2D-3D conversion quality information available for the selected content based on the information transmitted by the 3D content providing apparatus; selecting the 2D-3D conversion quality by a user's input through the user terminal; and transmitting a 3D content of the selected content which has the selected 2D-3D conversion quality from the 3D content providing apparatus to the user terminal.

The method may further include converting a 2D content of the selected content into the 3D content by the 3D content providing apparatus corresponding to the selected 2D-3D conversion quality.

The method may further include transmitting the selected content and information of the selected 2D-3D conversion quality from the 3D content providing apparatus to a content converting apparatus; converting a 2D content of the selected content into the 3D content by the content converting apparatus corresponding to the selected 2D-3D conversion quality; and receiving the 3D content from the content converting apparatus by the 3D content providing apparatus.

The converting may include determining a degree of performance of a plurality of conversion processes with different conversion qualities corresponding to the selected 2D-3D conversion quality; classifying a plurality of frames of the 2D content as a plurality of frame groups corresponding to the plurality of conversion processes based on the determined degree of performance of the plurality of conversion processes; and performing the plurality of conversion processes to the plurality of classified frame groups.

The classifying may include determining the frame group for which a first conversion process is performed by down-sampling the plurality of frames at a sampling rate corresponding to the degree of performance of the first conversion process among the plurality of conversion processes.

The classifying may include determining the frame group for which the first conversion process is performed, among the plurality of frames based on a degree of importance corresponding to the degree of performance of the first conversion process among the plurality of conversion processes.

The performing may include performing the first conversion process among the plurality of conversion processes with respect to a first frame group among the plurality of frame groups; and performing a second conversion process with respect to a second frame group among the plurality of frame groups by using a performance result of the first conversion process with respect to the first frame group.

The second conversion process may include interpolation or tracking by using the performance result of the first conversion process.

According to an aspect of an exemplary embodiment, there is provided a 3D content providing apparatus which provides a 3D content converted from a 2D content, the apparatus including a communication unit which communicates with a user terminal; and a controller which transmits a plurality of content information the user terminal for display, selects one of the plurality of contents by a user's input transmitted by the user terminal, transmits 2D-3D conversion quality information available for the selected content to the user terminal for display, and selects the 2D-3D conversion quality by a user's terminal transmitted by the user terminal to transmit a 3D content of the selected content which has the selected 2D-3D conversion quality.

The apparatus may further include a converter which converts a 2D content of the selected content into the 3D content corresponding to the selected 2D-3D conversion quality.

The controller may transmit the selected content and information of the selected 2D-3D conversion quality to a content conversion apparatus, and controls the content converting apparatus to receive the 3D content converted from the 2D content of the selected content corresponding to the selected 2D-3D conversion quality, from the content converting apparatus.

The converter may determine a degree of performance of a plurality of conversion processes with different conversion qualities corresponding to the selected 2D-3D conversion quality, classifies a plurality of frames of the 2D content as a plurality of frame groups corresponding to the plurality of conversion processes based on the determined degree of performance of the plurality of conversion processes, and performs the plurality of conversion processes with respect to the plurality of classified frame groups.

The converter may determine the frame group for which a first conversion process is performed by down-sampling the plurality of frames at a sampling rate corresponding to the degree of performance of the first conversion process among the plurality of conversion processes.

The converter may determine the frame group for which the first conversion process is performed among the plurality of frames based on a degree of importance corresponding to the degree of performance of the first conversion process among the plurality of conversion processes.

The converter may performs the first conversion process among the plurality of conversion processes with respect to a first frame group among the plurality of frame groups, and performs a second conversion process with respect to a second frame group among the plurality of frame groups by using a performance result of the first conversion process with respect to the first frame group.

The second conversion process may include an interpolation or tracking by using the performance result of the first conversion process.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram showing a configuration of a 3D content providing apparatus according to an exemplary embodiment;
FIG. 2 is a flowchart showing operation of the 3D content providing apparatus shown in FIG. 1;
FIG. 3 shows an example of a 2D-3D converting process to be performed by the 3D content providing apparatus shown in FIGS. 1 and 2;
FIG. 4 is a flowchart showing another example of the operation of the 3D content providing apparatus shown in FIGS. 1 to 3;
FIG. 5 is a flowchart showing still another example of the operation of the 3D content providing apparatus shown in FIGS. 1 to 3;
FIG. 6 is a block diagram showing a configuration of a 3D content providing apparatus according to another exemplary embodiment;
FIG. 7 is a flowchart showing operation of the 3D content providing apparatus shown in FIG. 6;
FIG. 8 is a flowchart showing another example of operation of the 3D content providing apparatus shown in FIG. 6;
FIGs. 9 and 10 are flowcharts showing still another example of the operation of the 3D content providing apparatus shown in FIGS. 1 to 3;
FIGS. 11 and 12 are flowcharts showing still another example of the operation of the 3D content providing apparatus shown in FIG. 6;
FIG. 13 is a flowchart showing still another example of the operation of the 3D content providing apparatus shown in FIGS. 1 to 3;
FIG. 14 is a flowchart showing still another example of the operation of the 3D content providing apparatus shown in FIG. 6;
FIG. 15 is a flowchart showing still another example of the operation of the 3D content providing apparatus shown in FIGS. 1 to 3 or the 3D content providing apparatus shown in FIG. 6;
FIG. 16 is a flowchart showing still another example of the operation of the 3D content providing apparatus shown in FIGS. 1 to 3 or the 3D content providing apparatus shown in FIG. 6;
FIG. 17 illustrates an example of a graphic user interface (GUI) of information regarding a plurality of contents displayed in a user terminal;
FIG. 18 illustrates an example of a GUI of information regarding 2D-3D conversion quality available for a selected content displayed in the user terminal; and
FIG. 19 illustrates an example of a 2D-3D converting operation performed by the 3D content providing apparatus which is explained with reference to FIGS. 16 to 18.

### DETAILED DESCRIPTION

Below, exemplary embodiments will be described in detail with reference to accompanying drawings. However, the present disclosure is not restricted or limited to such exemplary embodiments. For reference, in explaining the present disclosure, well-known functions or constructions will not be described in detail so as to avoid obscuring the description with unnecessary detail.

The term "unit" as used herein means a hardware component, such as a processor or circuit, and/or a software component that is executed by a hardware component such as a processor.

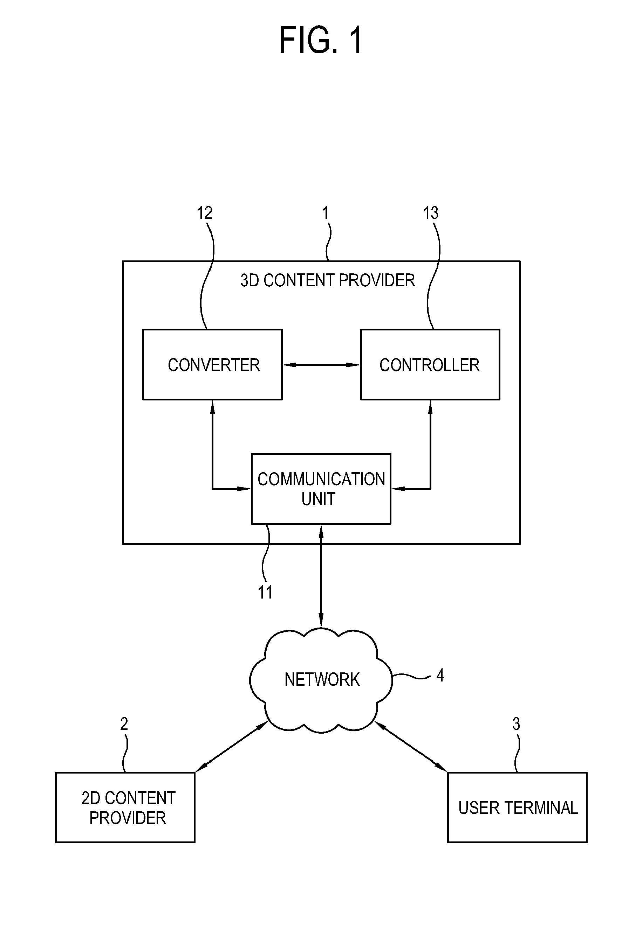

FIG. 1 is a block diagram showing a configuration of a 3D content providing apparatus according to an exemplary embodiment. The 3D content providing apparatus 1 converts two-dimensional (2D) contents into 3D contents. In this exemplary embodiment, the contents include moving picture contents, for example, the movies, dramas, sports, etc. In this exemplary embodiment, 3D contents are converted from 2D contents.

The 3D content providing apparatus 1 provides 3D contents to a user terminal 3 through a network 4. The user terminal 3 has a function of displaying 3D contents provided from the 3D content providing apparatus 1 as a 3D image. For example, the user terminal 3 may include a TV, a PC, a smart phone, a smart pad, a PMP, an MP3 player, etc., but not limited thereto. The user terminal 3 may include any device as long as it can receive 3D contents from the 3D contents providing apparatus 1 and display the 3D contents as a 3D image.

The network 4 allows wired and/or wireless data communication between the 3D content providing apparatus 1 and the user terminal 3 for transmitting 3D contents. There is no limit to the communication method of the network 4 as long as it is the data communication for transmitting the 3D contents, and the communication method of the network 4 includes all known communication methods.

The 3D content providing apparatus 1 may receive 2D contents to be converted into 3D contents from a 2D content providing apparatus 2. The 3D content providing apparatus 1 may receive 2D contents from the 2D content providing apparatus 2 through the network 4. For example, the 2D content providing apparatus 2 may be a network server which stores 2D contents and transmits the 2D contents to the 3D content providing apparatus 1 as requested by the 3D content providing apparatus 1. According to another exemplary embodiment, the 3D content providing apparatus 1 may receive 2D content from the 2D content providing apparatus 2 through another data transfer means. For example, the 2D content providing apparatus 2 may be a device provided with a storage means such as a hard disk, a flash memory, etc. for storing 2D contents, which is locally connected to the 3D content providing apparatus 1 and which transmits 2D contents to the 3D content providing apparatus 1 as requested by the 3D content providing apparatus 1. In this case, there is no limit to a method of locally connecting the 3D content providing apparatus 1 and the 2D content providing apparatus 2 as long as it is for transmitting data of 2D contents. For example, the local connection method may include universal serial bus (USB) or the like.

As shown in FIG. 1, the 3D content providing apparatus 1 may include a communication unit 11, a converter 12 and a controller 13. The communication unit 11 may perform data communication between the 2D content providing apparatus 2 and the 3D content providing apparatus 1, and data communication between the user terminal 3 and the 3D content providing apparatus 1.

The converter 12 converts 2D contents into 3D contents. The 2D contents include a plurality of video frames (hereinafter, referred to as a 'frame'). The 3D contents are based on a viewer's binocular parallax, which may include a plurality of left-eye frames and a plurality of right-eye frames. Among the plurality of left-eye frames and the plurality of right-eye frames, a pair of left-eye frame and right-eye frame may be respectively converted from at least a corresponding one among the plurality of frames of the 2D contents. The conversion from 2D contents into 3D contents (hereinafter, referred to as '2D-3D conversion'), performed by the converter 12, will be described in more detail below.

The controller 13 receives 2D contents from the 2D content providing apparatus 2 so that the received 2D contents can be converted into 3D contents, and controls the converted 3D contents to be transmitted to the user terminal 3. The controller 13 may include a nonvolatile memory (not shown) such as a hard disk, a flash memory, etc. where a control program corresponding to implementation of such control is stored; a volatile memory (not shown) such as a random access memory (RAM) where at least a part of the stored control program is loaded; and a central processing unit (CPU) for executing the loaded control program.

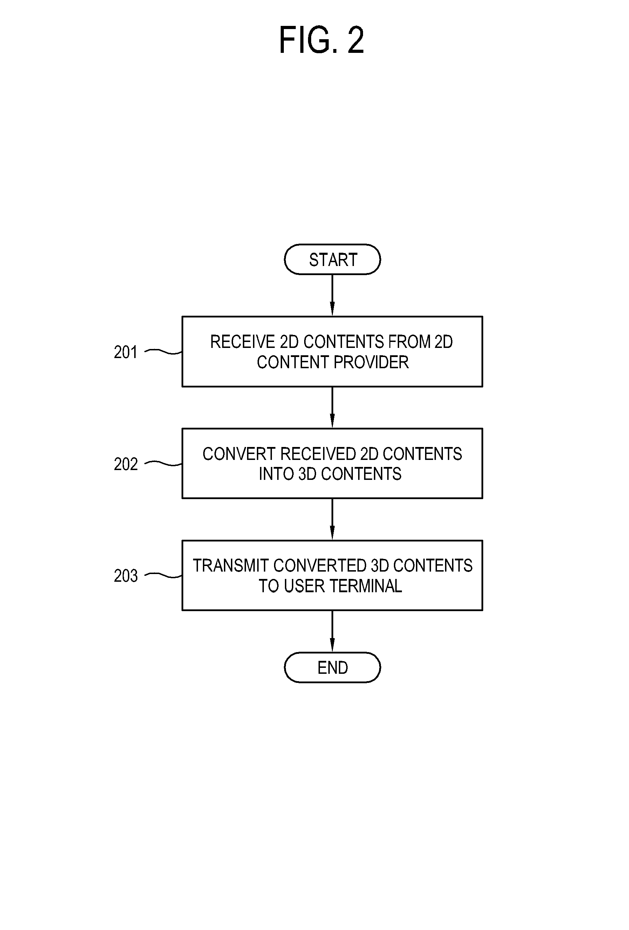

FIG. 2 is a flowchart showing operation of the 3D content providing apparatus 1 shown in FIG. 1. First, the 3D content providing apparatus 1 receives 2D contents from the 2D content providing apparatus 2 at operation 201. Then, the 3D content providing apparatus 1 converts the received 2D contents into 3D contents at operation 202. Next, the 3D content providing apparatus 1 transmits the converted 3D contents to the user terminal 3 at operation 203. The transmission of the converted 3D contents may be achieved by a video on demand (VOD) service.

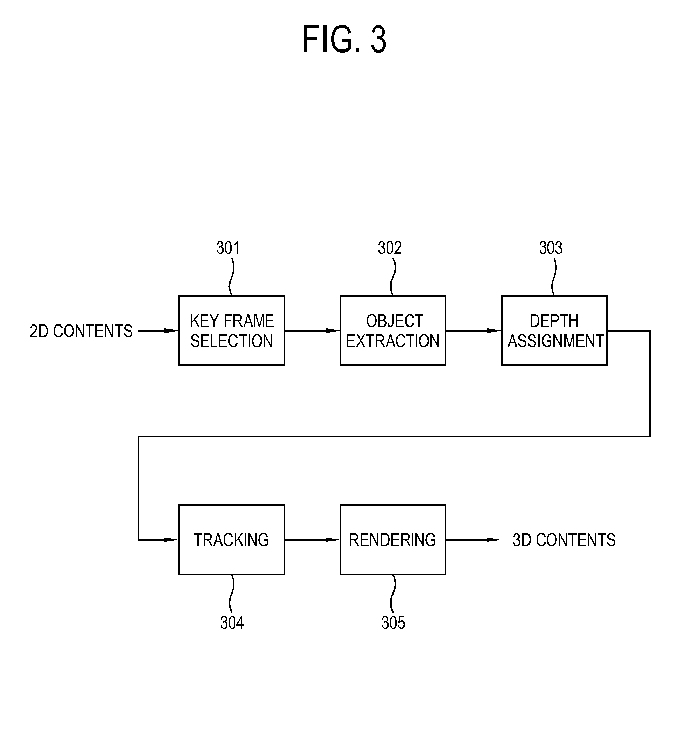

FIG. 3 shows an example of a 2D-3D converting process to be performed by the 3D content providing apparatus shown in FIGS. 1 and 2. In this exemplary embodiment, the 2D-3D converting process includes key frame selection 301, object extraction 302, depth assignment 303, tracking 304 and rendering 305.

First, in the key frame selection 301, a random key frame is selected among plural frames of 2D contents. As the key frame, a frame representing contents of an image may be selected among the plural frames of the 2D contents. For example, the key frame may include a frame where a scene is switched, a frame where a main character of a scene is closed up, etc.

In the object extraction 302, an object is extracted with regard to the selected key frame. The object is a main image contained in the scene of each frame, and for example, may be an image of a main character in a scene where the main character appears, an image of a vehicle in a scene where a vehicle moves, etc. In the object extraction 302, an image of a corresponding frame is segmented so that a boundary of an object can be extracted from segmentation results.

In the depth assignment 303, depth is assigned to the object extracted by the object extraction. The depth is a parameter for having a 3D visual effect, which is used for shifting the object leftward and rightward by an assigned parameter in generated corresponding left-eye and right-eye frames. In the depth assignment 303, a previously given standardized template may be used for depth assignment.

In the tracking 304, the left-eye frame and the right-eye frame are generated corresponding not to the key frame but to the other frames. The tracking 304 may be performed with reference to the object extraction 302 and the depth assignment 303 performed with regard to the key frame.

In the rendering 305, image processing for a completed 3D image is performed with regard to the left-eye and right-eye frames in accordance with the depth assignment 303 and the tracking 304. For example, the rendering 305 may include a process for filling a blank area generated as an object is shifted in an image of a frame, so called 'inpainting', etc.

At least one process among the 2D-3D converting processes according to an exemplary embodiment may include a manual process implemented in accordance with a user's input, and an automatic process implemented in accordance with preset reference information. For example, in the object extraction 302, the depth assignment 303 or the like processes, some frames may be processed by the manual processes while the other frames may be processed by the automatic processes.

In the manual processes, the converting processes may be performed in accordance with an input of a user. The 3D content providing apparatus 1 may further include a user input unit (not shown) such as a keyboard, a mouse, a tablet, etc. for the input of a user. Also, the 3D content providing apparatus 1 may further include a display unit (not shown) such as a monitor or the like that displays an image being converted so that a user can ascertain a situation of the converting process. In order to receive a user's input effectively, the 3D content providing apparatus 1 may display a graphic user interface (GUI, not shown) containing an image of a processed frame, a predetermined input menu, etc. on the display unit. A user may make input for the converting process through the input menu or the like of the GUI while ascertaining an image of a frame displayed on the display unit. For instance, a user may make input for extracting an object through the input menu or the like of the GUI while ascertaining the object contained in an image of a frame.

In the automatic processes, the processes are performed on the basis of the preset reference information. For example, in the key frame selection 301, motion of an image of a frame is analyzed, and a frame having an object, of which motion is equal to or higher than a predetermined threshold value, is selected as a key frame. Here, the reference information may be a threshold value of the motion, by which the object can be identified for selecting the key frame.

In an additional exemplary embodiment, the converter 12 may perform a 3D picture quality process with regard to the frame processed with the rendering 305. The 3D picture quality process may include contrast enhancement, detail enhancement, etc.

Referring back to FIG. 2, the controller 13 may determine quality of 3D contents to be converted, and control the converter 12 to perform the 2D-3D converting process in accordance with the determined quality of 3D contents. In a certain 2D-3D converting process, the quality of 3D contents may show how much percentage each of the manual process and the automatic process is. For example, in the object extraction 202, the manual process and the automatic process may go half and half. The quality of 3D contents may be represented as a proportion (hereinafter, referred to as a 'combination proportion') of the automatic process (or the manual process) in the whole of a certain 2D-3D converting process.

The quality of 3D contents includes a plurality of quality modes, and the controller 13 may select one of the plurality of quality modes. Thus, the 2D-3D converting process may be performed corresponding to a selected mode among the plurality of quality modes. The plurality of quality modes may include a simple mode, a basic mode, an advanced mode and an expert mode in order of high quality. For example, these quality modes may have combination proportions (i.e., the proportions of the automatic process to the entire 2D-3D converting process) of greater than 85%, 85%, 70% and 50%, respectively.

The controller 13 may determine the quality of 3D contents in accordance with the kinds or formats of 2D contents. For example, if the 2D contents are recently released movies, relatively high quality may be determined for the 2D contents. On the other hand, if the 2D contents are old movies, relatively low quality may be determined for the 2D contents. According to another exemplary embodiment, if the movie is a grand scale blockbuster, relatively high quality may be determined for this movie. On the other hand, the relatively low quality may be determined for a story-oriented movie. According to still another exemplary embodiment, the quality of 3D contents may be determined in accordance with genres of contents such as the sports, movies, drama, etc.

According to another exemplary embodiment, the controller 13 may determine the quality of 3D contents to be converted in accordance with a user's request of the user terminal 3. The controller 13 may transmit information about the quality of available 3D contents to the user terminal 3 so that a user of the user terminal 3 can determine the quality of 3D contents. The information about the 3D contents may include product information for introducing picture quality characteristics based on quality mode, price information for informing various price ranges corresponding to the quality modes, etc. The user terminal 3 may display the information about the received quality of 3D contents through a predetermined GUI. A user of the user terminal 3 may determine desired quality of 3D contents through the GUI on the basis of the displayed quality information. The user terminal 3 transmits a content offer request corresponding to the quality of 3D contents selected by a user to the 3D content providing apparatus 1. The controller 13 controls the 3D contents to be converted in accordance with the quality mode based on the received content offer request.

According to an additional exemplary embodiment, the controller 13 may determine 2D contents to be converted in accordance with a user's request of the user terminal 3. The controller 13 may transmit information about the quality of available 2D contents to the user terminal 3 so that a user of the user terminal 3 can determine the quality of 2D contents. The information about the 2D contents may include the tile, the substances, etc. of the 2D contents. The user terminal 3 may display the information about the received quality of 2D contents through a predetermined GUI. A user of the user terminal 3 may determine desired quality of 2D contents through the GUI on the basis of the displayed quality information. The user terminal 3 transmits a content offer request corresponding to the quality of 2D contents selected by a user to the 3D content providing apparatus 1. The controller 13 controls the 2D contents to be converted in accordance with the quality mode based on the received content offer request.

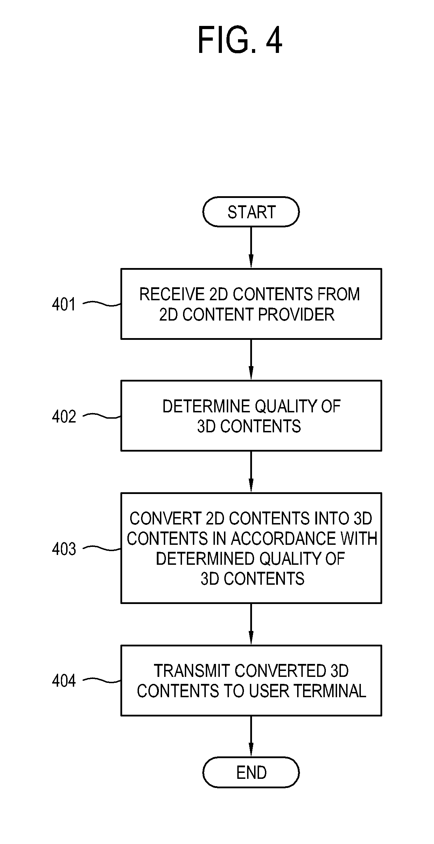

FIG. 4 is a flowchart showing another example of the operation of the 3D content providing apparatus shown in FIGS. 1 to 3. First, the 3D content providing apparatus 1 receives 2D contents from the 2D content providing apparatus 2 at operation 401. At operation 402, the 3D content providing apparatus 1 determines the quality of 3D contents to be converted. At operation 403, the 3D content providing apparatus 1 converts the 2D contents into 3D contents in accordance with the determined quality of 3D contents. At operation 404, the 3D content providing apparatus 1 transmits the converted 3D contents to the user terminal 3.

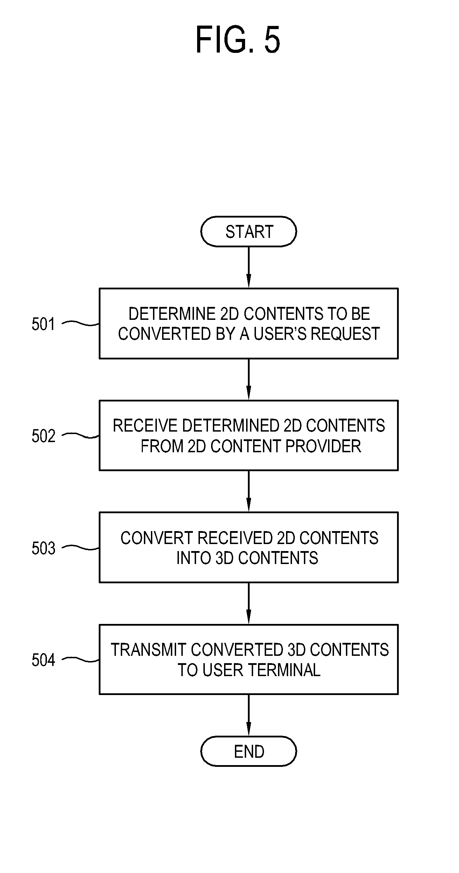

FIG. 5 is a flowchart showing still another example of the operation of the 3D content providing apparatus shown in FIGS. 1 to 3. First, the 3D content providing apparatus 1 determines 2D contents to be converted in accordance with a request of a user of the user terminal 3 at operation 501. At operation 502, the 3D content providing apparatus 1 receives the determined 2D contents from the 2D content providing apparatus 2. At operation 503, the 3D content providing apparatus 1 converts the received 2D contents into 3D contents. At operation 504, the 3D content providing apparatus 1 transmits the converted 3D contents to the user terminal 3.

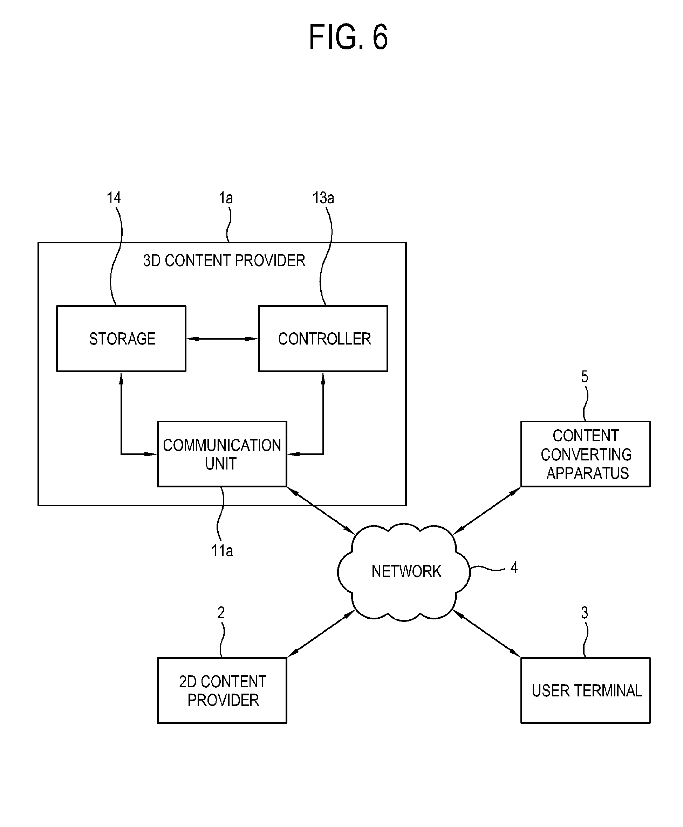

FIG. 6 is a block diagram showing a configuration of a 3D content providing apparatus according to another exemplary embodiment. Regarding a 3D content providing apparatus 1a shown in FIG. 6, repetitive descriptions about the same or similar configuration as the 3D content providing apparatus 1 described with reference to FIGS. 1 to 5 will be avoided.

The 3D content providing apparatus 1a receives 3D contents converted from 2D contents from the content converting apparatus 5 and provides it to the user terminal 3. As shown in FIG. 6, the 3D content providing apparatus 1a may include a communication unit 11a, a storage 14 and a controller 13a. The communication unit 11a performs data communication between the 2D content providing apparatus 2 and the 3D content providing apparatus 1a, data communication between the user terminal 3 and the 3D content providing apparatus 1a, and data communication between the content converting apparatus 5 and the 3D content providing apparatus 1a.

The storage 14 stores the converted 3D contents received from the content converting apparatus 5.

The controller 13a receives 2D contents from the 2D content providing apparatus 2, controls the received 2D contents to be transmitted to the content converting apparatus 5, receives 3D contents converted by the content converting apparatus 5 from the content converting apparatus 5, and controls the received 3D contents to be transmitted to the user terminal 3.

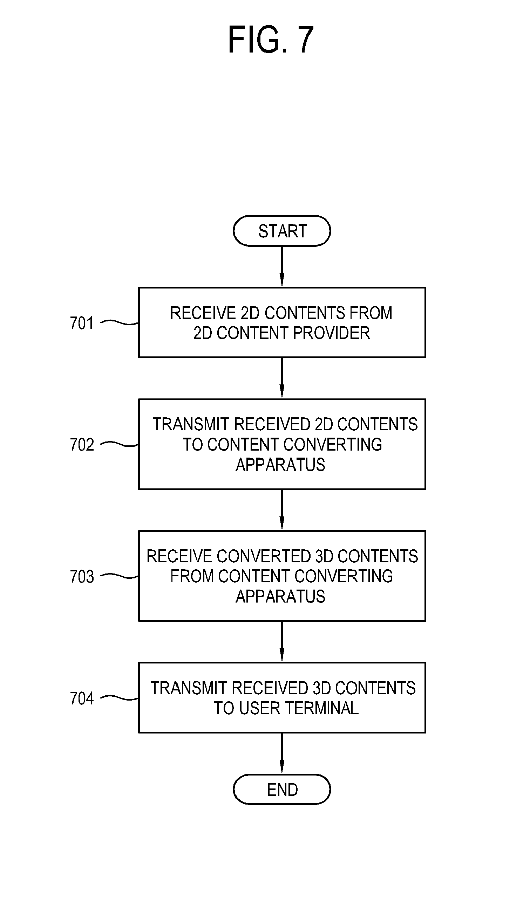

FIG. 7 is a flowchart showing operation of the 3D content providing apparatus shown in FIG. 6. First, the 3D content providing apparatus 1a receives 2D contents from the 2D content providing apparatus 2 at operation 701. At operation 702, the 3D content providing apparatus 1a transmits the received 3D contents to the content converting apparatus 5. At operation 703, the 3D content providing apparatus 1a receives 3D contents converted by the content converting apparatus 5 from the content converting apparatus 5. At operation 704, the 3D content providing apparatus 1a transmits the received 3D contents to the user terminal 3.

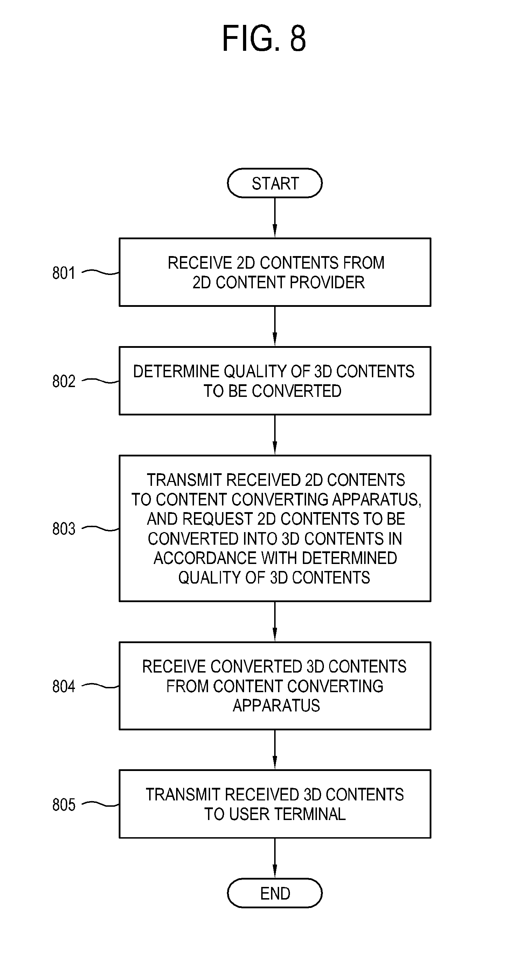

FIG. 8 is a flowchart showing another example of operation of the 3D content providing apparatus shown in FIG. 6. First, the 3D content providing apparatus 1a receives 2D contents from the 2D content providing apparatus 2 at operation 801. At operation 802, the 3D content providing apparatus 1a determines the quality of 3D contents to be converted. At operation 803, the 3D content providing apparatus 1a transmits the received 2D contents to the content converting apparatus 5 and requests the content converting apparatus 5 to convert the 2D contents into 3D contents in accordance with the determined quality of 3D contents. At operation 804, the 3D content providing apparatus 1a receives the converted 3D contents from the content converting apparatus 5. At operation 805, the 3D content providing apparatus 1a transmits the received 3D contents to the user terminal 3.

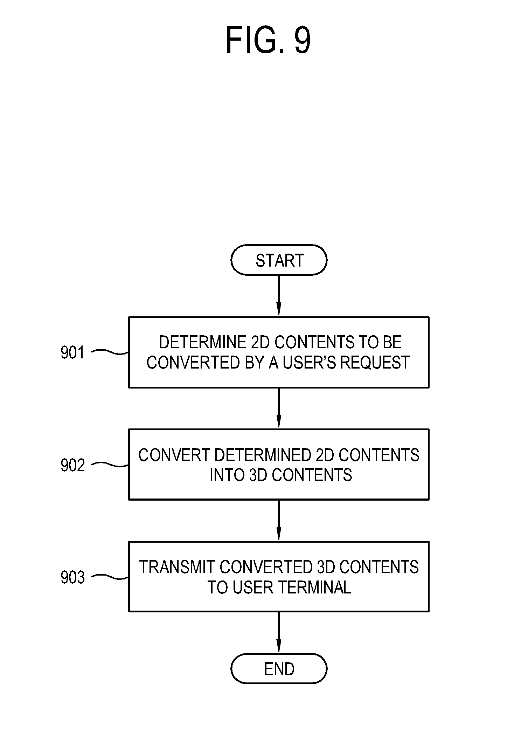

FIG. 9 is a flowchart showing still another example of the operation of the 3D content providing apparatus shown in FIGS. 1 to 3. First, the 3D content providing apparatus 1 determines 2D contents to be converted as requested by a user of the user terminal 3 at operation 901. At operation 902, the 3D content providing apparatus 1 converts the determined 2D contents into 3D contents. At operation 903, the 3D content providing apparatus 1 transmits the converted 3D contents to the user terminal 3.

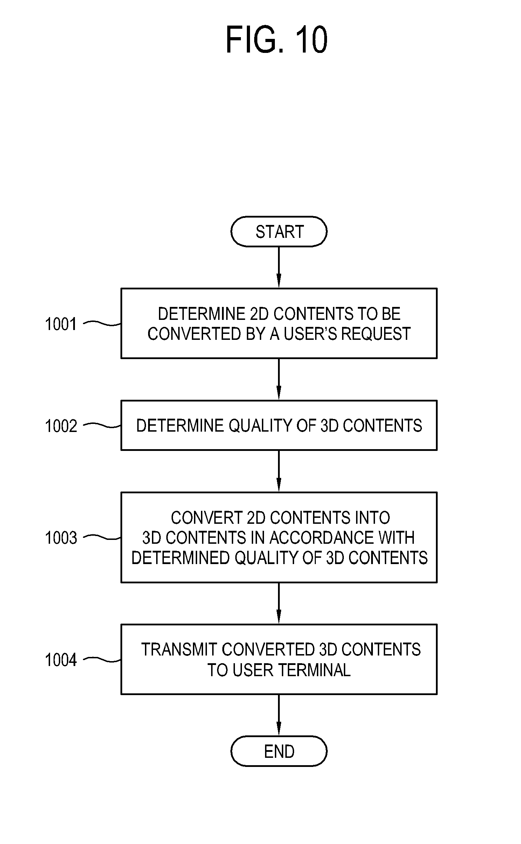

FIG. 10 is a flowchart showing still another example of the operation of the 3D content providing apparatus shown in FIGS. 1 to 3. First, the 3D content providing apparatus 1 determines 2D contents to be converted as requested by a user of the user terminal 3 at operation 1001. At operation 1002, the 3D content providing apparatus 1 determines the quality of 3D contents to be converted. At operation 1003, the 3D content providing apparatus 1 converts 2D contents into 3D contents in accordance with the determined quality of 3D contents. At operation 1004, the 3D content providing apparatus 1 transmits the converted 3D contents to the user terminal 3.

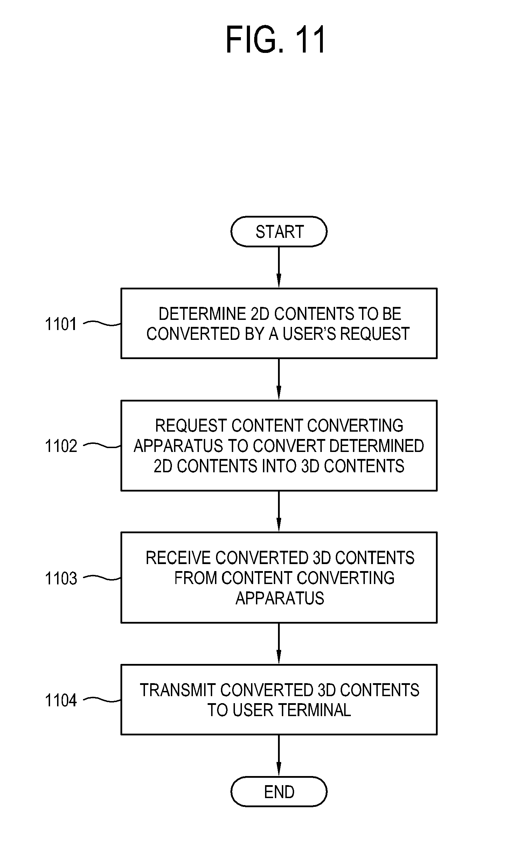

FIG. 11 is a flowchart showing still another example of the operation of the 3D content providing apparatus 1a shown in FIG. 6. First, the 3D content providing apparatus 1a determines 2D contents to be converted as requested by a user of the user terminal 3 at operation 1101. At operation 1102, the 3D content providing apparatus 1a requests the content converting apparatus 5 to convert the determined 2D contents into 3D contents. At operation 1103, the 3D content providing apparatus 1a receives the converted 3D contents from the content converting apparatus 5. At operation 1104, the 3D content providing apparatus 1a transmits the received 3D contents to the user terminal 3.

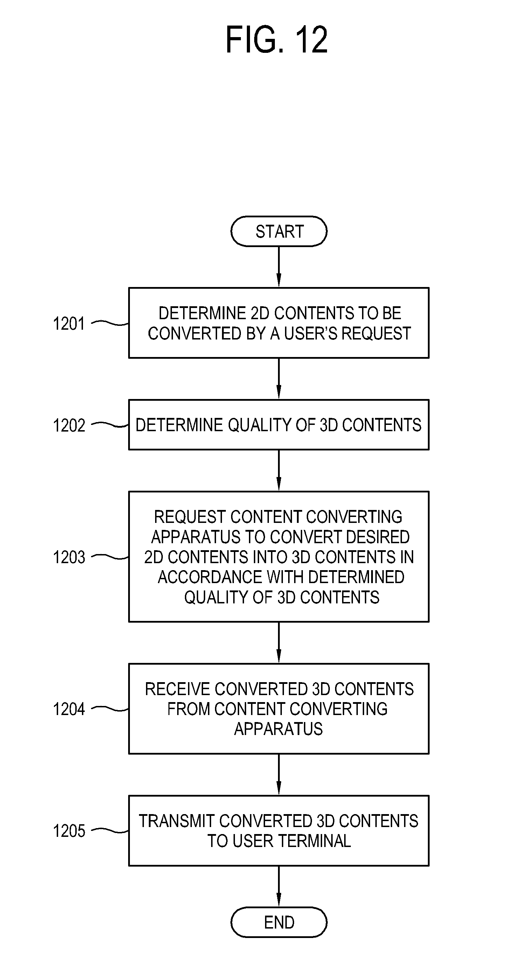

FIG. 12 is a flowchart showing still another example of the operation of the 3D content providing apparatus 1a shown in FIG. 6. First, the 3D content providing apparatus 1a determines 2D contents to be converted as requested by a user of the user terminal 3 at operation 1201. At operation 1202, the 3D content providing apparatus 1a determines quality of 3D contents to be converted. At operation 1203, the 3D content providing apparatus 1a requests the content converting apparatus 5 to convert the 2D contents desired to be converted into 3D contents in accordance with the determined quality of 3D contents. At operation 1204, the 3D content providing apparatus 1a receives the converted 3D contents from the content converting apparatus 5. At operation 1205, the 3D content providing apparatus 1a transmits the received 3D contents to the user terminal 3.

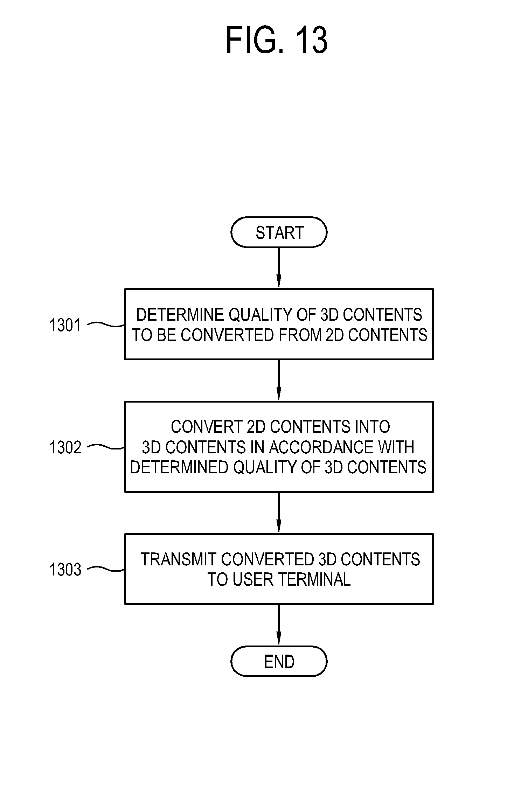

FIG. 13 is a flowchart showing still another example of the operation of the 3D content providing apparatus shown in FIGS. 1 to 3. First, the 3D content providing apparatus 1 determines the quality of 3D contents to be converted at operation 1301. At operation 1302, the 3D content providing apparatus 1 converts 2D contents into 3D contents in accordance with the determined quality of 3D contents. At operation 1303, the 3D content providing apparatus 1 transmits the converted 3D contents to the user terminal 3.

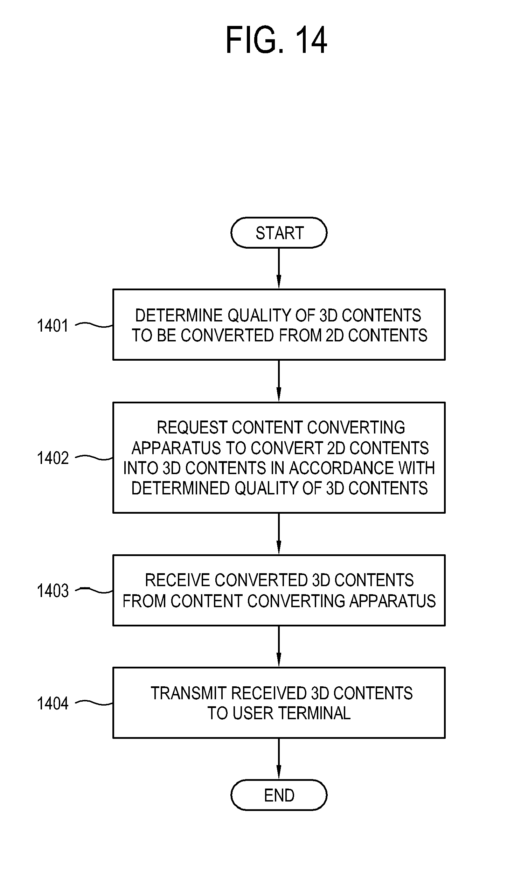

FIG. 14 is a flowchart showing still another example of the operation of the 3D content providing apparatus shown in FIG. 6. First, the 3D content providing apparatus 1a determines the quality of 3D contents to be converted at operation 1401. At operation 1402, the 3D content providing apparatus 1 requests the content converting apparatus 5 to convert 2D contents desired to be converted into 3D contents in accordance with the determined quality of 3D contents. At operation 1403, the 3D content providing apparatus 1a receives the converted 3D contents from the content converting apparatus 5. At operation 1404, the 3D content providing apparatus 1a transmits the converted 3D contents to the user terminal 3.

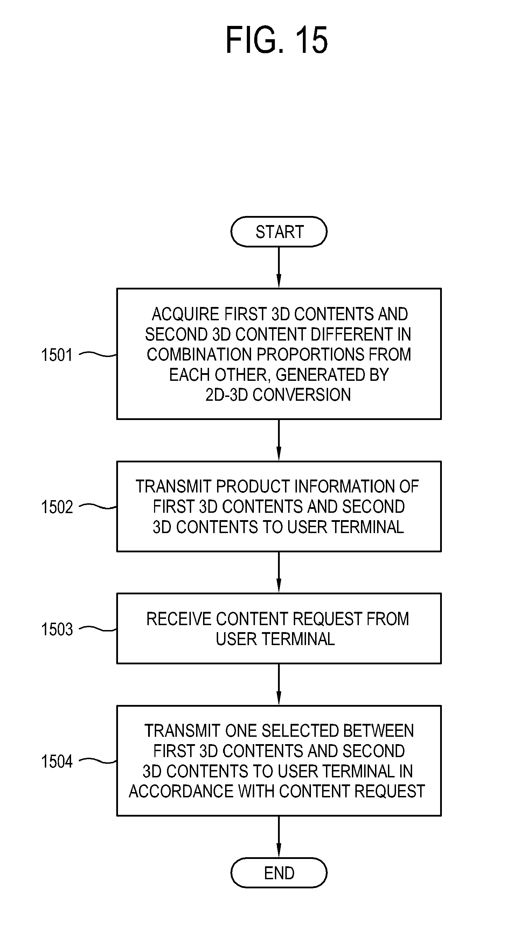

FIG. 15 is a flowchart showing still another example of the operation of the 3D content providing apparatus shown in FIGS. 1 to 3 or the 3D content providing apparatus shown in FIG. 6. First, the 3D content providing apparatus 1 or 1a acquires first 3D contents and second 3D contents generated by the 2D-3D conversion at operation 1501. Here, the first 3D contents and the second 3D contents are 3D contents generated by different combination proportions for the 2D-3D conversion. At operation 1502, 3D content providing apparatus 1 or 1a transmits product information of the first 3D contents and product information of the second 3D contents to the user terminal 3. At operation 1503, the 3D content providing apparatus 1 or 1a receives a content offer request from the user terminal 3. At operation 1504, the 3D content providing apparatus 1 or 1a sends the user terminal 3 3D contents selected between the first 3D contents and the second 3D contents in response to the content offer request received from the user terminal 3.

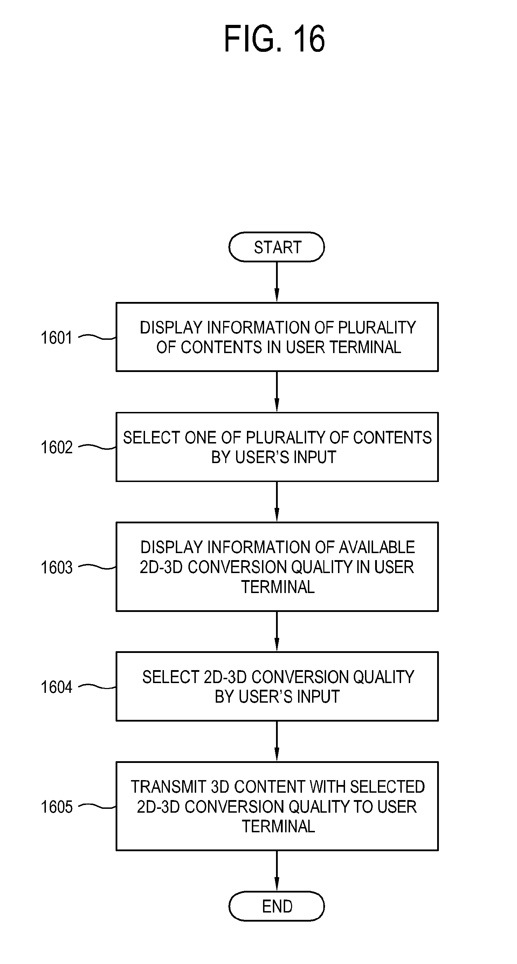

FIG. 16 is a flowchart showing still another example of the operation of the 3D content providing apparatus 1 shown in FIGS. 1 to 3 or the 3D content providing apparatus 1a shown in FIG. 6. Hereinafter, it will be agreed that, for purposes of convenience, the 3D content providing apparatus 1 is representatively explained and such explanation may apply to the 3D content providing apparatus 1a unless there is further explanation. Elements of the 3D content converting apparatus 1 in FIG. 6 which are the same as or similar to those of the 3D content converting apparatus 1 in FIGS. 1 to 15 will not be explained repetitively.

A user accesses the 3D content providing apparatus 1 through a network 4 by using a user terminal 3 if he/she desires to use 3D contents. At operation 1601, the 3D content providing apparatus 1 transmits a plurality of content information which may be converted from 2D to 3D, to the user terminal 3, and the user terminal 3 displays the plurality of received information on a display unit (not shown). The 3D content providing apparatus 1 may store the plurality of 2D-3D convertible content information in a storage unit (not shown) and may receive information from an external device, e.g., the 2D content providing apparatus 2.

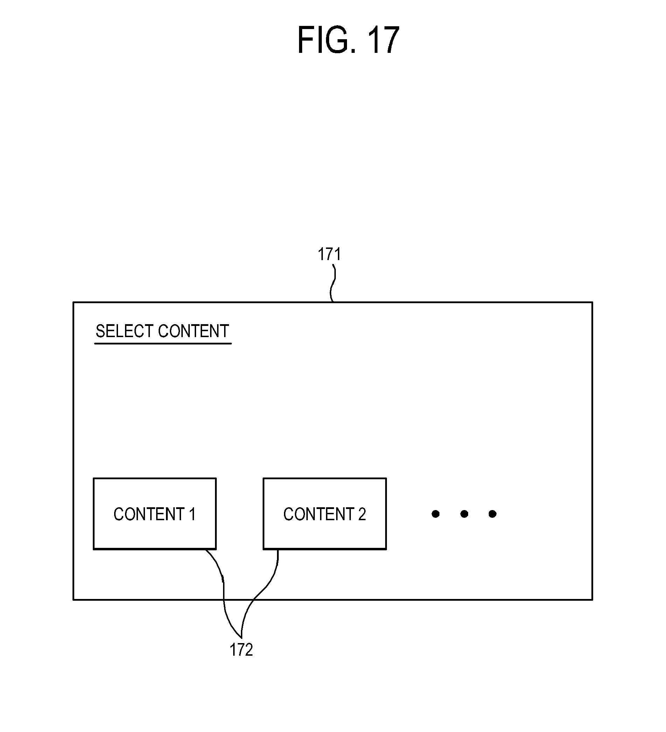

FIG. 17 illustrates an example of a graphic user interface (GUI) of information regarding a plurality of contents displayed in the user terminal 3. As shown therein, a GUI 171 includes information 172 on a plurality of contents which may be provided by the 3D content providing apparatus through 2D-3D conversion. The information 172 on the plurality of contents may include name, genre, play time, synopsis, and cast of the contents. The information 172 on the contents may be displayed as an icon to be selected by a user. A user may select a desired content by using an input means of the user terminal 3. In FIG. 17, 'a content 2' is illustrated as a selected content. The 3D content providing apparatus 1 identifies that a predetermined content has been selected, based on information transmitted by the user terminal 3.

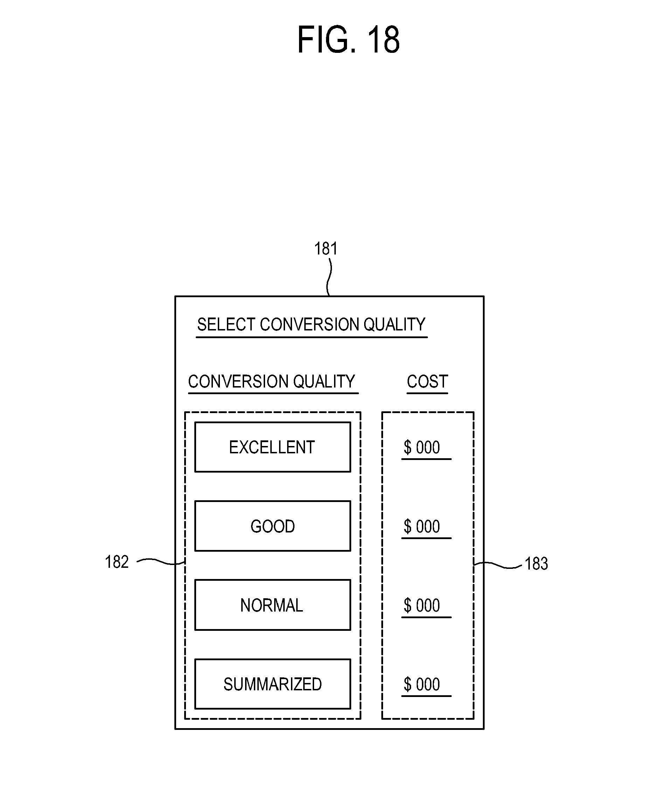

Returning to FIG. 16, at operation 1603, the 3D content providing apparatus 1 transmits 2D-3D conversion quality information available for the selected content to the user terminal 3, and the user terminal 3 displays the available 2D-3D conversion quality information on the display unit. The 3D content providing apparatus 1 may store 2D-3D conversion quality information available for each content, in the storage unit. FIG. 18 illustrates an example of a GUI of information regarding 2D-3D conversion quality available for a selected content displayed in the user terminal 3. As shown therein, a GUI 181 includes information 182 on various conversion qualities which may be provided by the 3D content providing apparatus 1 through 2D-3D conversion. The information 182 on the conversion quality may include, e.g., four types of conversion qualities of excellent, good, normal and summarized. However, the information 182 on the conversion qualities is an example, and may vary. For example, the information 182 on the conversion quality may include three or five types of conversion qualities. The GUI 181 may further include information 183 on conversion cost corresponding to each conversion quality. The GUI 181 may further include explanation (not shown) on the nature of each conversion quality, guide information (not shown) on conversion time (the time when the converted 3D content is available if there is no converted 3D content) corresponding to each conversion quality, and recommendation information of suitable conversion quality corresponding to the nature of the content.

The information 182 on the conversion quality may be displayed as an icon to be selected by a user. A user may select a desired conversion quality by using an input means of the user terminal. In FIG. 18, the conversion quality of "good" is selected as an example. However, such selection of the conversion quality is an example, and may vary. For example, a user may directly input a desired quality (adjust the conversion quality freely) rather than the available conversion quality is distinguished and displayed in advance.

At operation 1604, the 3D content providing apparatus 1 identifies that a predetermined conversion quality has been selected, based on information transmitted by the user terminal 3. At operation 1605, the 3D content providing apparatus 1 transmits to the user terminal 3 a 3D content as the content selected at operation 1602 and having the conversion quality selected at operation 1604.

The 3D content providing apparatus 1 may store in advance in the storage unit a 3D content with various conversion qualities that has been converted from a 2D content. If there is a 3D content with the selected conversion quality already, the 3D content providing apparatus 1 may directly transmit the 3D content to the user terminal 3. If there is no 3D content with the selected conversion quality, the 3D content providing apparatus 1 may perform 2D-3D conversion to generate a 3D content with the selected conversion quality, and transmit the generated 3D content to the user terminal 3. The 2D-3D conversion may be performed by the 3D content providing apparatus 1 or by an external content converting apparatus 5 by the 3D content providing apparatus 1a as shown in FIG. 6. In the latter case, the 3D content providing apparatus 1a may transmit the selected content and information on the conversion quality to the content converting apparatus 5, request for conversion, and receive the 3D content from the content converting apparatus 5 after the conversion is completed.

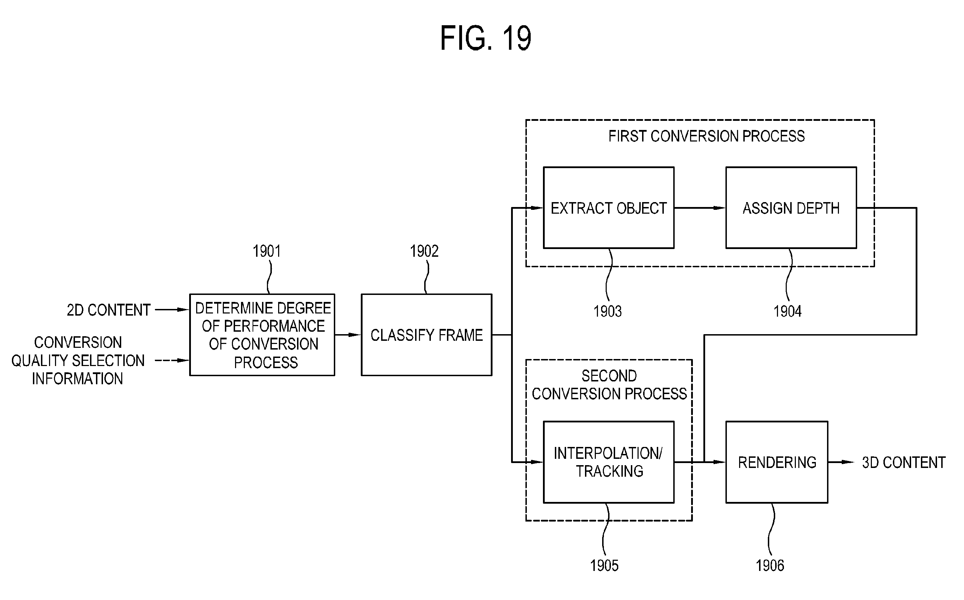

FIG. 19 illustrates an example of a 2D-3D converting operation performed by the 3D content providing apparatus 1 which is explained with reference to FIGS. 16 to 18. Elements of the 3D content converting apparatus 1 in FIG. 19 which are the same as or similar to those of the 3D content converting apparatus 1 in FIGS. 1 to 15 will not be explained repetitively. At operation 1901, the 3D content providing apparatus 1 determines a degree of performance of a plurality of conversion processes to apply to the 2D-3D conversion. The plurality of conversion processes according to the present exemplary embodiment may include a first conversion process whose 2D-3D conversion quality is relatively higher and a second conversion process whose conversion quality is relatively lower than the first conversion process. For example, the first conversion process includes a process of extracting an object or assigning a depth by an input of an operator performing the conversion process. The second conversion process includes a process of interpolating or tracking a frame by using the performance result of the first conversion process. However, the first and second conversion processes are not limited to the foregoing example and may include other various types of conversion processes. The plurality of conversion processes is not limited to two conversion processes and may include three or more conversion processes.

At operation 1901, the 3D content providing apparatus 1 may determine the degree of performance of the plurality of conversion processes (first, conversion process, second conversion process, etc.) based on the conversion quality (see "conversion quality selection information") selected at operation 1604. If the plurality of conversion processes includes a first conversion process corresponding to a higher conversion quality and a second conversion process corresponding to a lower conversion quality and the selected conversion quality is high, the degree of performance of the first conversion process is determined to be higher than the degree of performance of the second conversion process (or the degree of performance of the second conversion process is determined to be lower than the degree of performance of the first conversion process). For example, the degree of performance of the first conversion process may be determined to be 70% and the degree of performance of the second conversion process may be determined to be 30%. On the contrary, if the conversion quality is low, the degree of performance of the first conversion process is determined to be lower than the degree of performance of the second conversion process (or the degree of performance of the second conversion process is determined to be higher than the degree of performance of the first conversion process). For example, the degree of performance of the first conversion process may be determined to be 30% and the degree of performance of the second conversion process may be determined to be 70%. As shown in FIG. 18, if the conversion quality is classified as four types in advance, the 3D content providing apparatus 1 may determine the degree of performance of the plurality of conversion processes corresponding to a conversion quality selected from the four types of conversion qualities. In this case, information on the degree of performance of the plurality of conversion processes corresponding to each conversion quality may be provided in advance and stored in the storage unit, and the 3D content providing apparatus 1 may refer to the information to determine the degree of performance of the plurality of conversion processes.

If the degree of performance of the plurality of conversion processes is determined at operation 1901, the 3D content providing apparatus 1 classifies at operation 1902 a plurality of frames of a 2D content to be converted as a plurality of frame groups corresponding to the plurality of conversion processes based on the determined degree of performance of the plurality of conversion processes. If the plurality of conversion processes includes a first conversion process and a second conversion process, the 3D content providing apparatus 1 may classify the plurality of frames of the 2D content as a first frame group to which the first conversion process applies, and a second frame group to which the second conversion process applies. The 3D content providing apparatus 1 classifies the plurality of frames of the 2D content in consideration of the degree of performance of the plurality of conversion processes determined at operation 1901. For example, it is determined that the degree of performance of the first conversion process is 70% and the degree of performance of the second conversion process is 30%, the 3D content providing apparatus 1 may classify 70% of the entire frames of the 2D content as the first frame group and 30% as the second frame group.

The 3D content providing apparatus 1 performs the plurality of corresponding conversion processes to the plurality of classified frame groups. That is, the first conversion process is performed to the first frame group and the second conversion process is performed to the second frame group.

At operation 1902, the 3D content providing apparatus 1 may select the first frame group according to a predetermined standard to which the first conversion process corresponding to a relatively higher conversion quality applies. For example, the 3D content providing apparatus 1 may determine the first frame group by down-sampling the plurality of frames at a sampling rate corresponding to the degree of performance of the first conversion process determined at operation 1901. The down-sampling may be performed at a sampling rate of 1/n (n=1, 2, 3,...) with respect to entire frames. For example, if the first conversion process has the degree of 50%, the first frame group may be determined by down-sampling the frames at a sampling rate of 1/2. In this case, half of the entire frames may be selected as the first frame group.

According to another exemplary embodiment, at operation 1902, the 3D content providing apparatus 1 may determine the first frame group with a degree of importance corresponding to the degree of performance of the first conversion process determined at operation 1901, among the plurality of frames of the 2D content. The degree of importance corresponds to the degree of representation of an image among the plurality of frames. For example, a frame in which a scene is changed, a frame in which a main character is closed-up may have a high degree of importance. The degree of importance may be determined by the degree of change in a motion of the image in the frame. The 3D content providing apparatus 1 may determine that the frame in which a motion of an image in the concerned frame is a value or higher corresponding to the degree of performance of the first conversion process determined at operation 1901 is the first frame group. For example, if the degree of performance of the first conversion process is designated to be 50%, the frame which falls under top 1/2 of the entire frames in the order of degree of importation may be determined as the first frame group.

At operations 1903 and 1904, the 3D content providing apparatus 1 may extract an object and assign a depth to the determined first frame group by an operator's input. The 3D content providing apparatus 1 may sequentially display the frame selected as the first frame group, and provide a GUI for an operator to extract the object and assign the depth to the object. The 3D content providing apparatus 1 may extract the object and assign the depth by an operator's input through the GUI. For example, an operator may draw a line, etc. which indicates a boundary of a predetermined object through a user input unit (not shown) by using the GUI provided by the 3D content providing apparatus 1. The 3D content providing apparatus 1 may refer to the line, etc. drawn by the operator's input and extract an object having the boundary explained above. An operator may designate a depth value to be assigned to a predetermined object by using the GUI provided by the 3D content providing apparatus 1, with respect to such predetermined object in a frame. The 3D content providing apparatus 1 may refer to the value input by an operator to assign the depth to the object. The 3D content providing apparatus 1 ends the operations 1903 and 1904 when the object has been extracted and the depth has been assigned to such object within all frames selected as the first frame group.

At operation 1905, the 3D content providing apparatus 1 performs an interpolation operation or an up-sampling operation by using the performance result of the first conversion process (operations 1903 and 1904). Since the extraction of the object and assignment of depth has been performed to a part of frames of the 2D content (first frame), such extraction and assignment should be performed to the remaining frames. At operation 1905, the 3D content providing apparatus 1 extracts an object and assigns a depth to the remaining frames by using the result of the extraction of the object and assignment of the depth to the first frame group. For example, if the first frame group has been selected by the down-sampling at operation 1902, the 3D content providing apparatus 1 performs an up-sampling operation and an interpolation operation. The up-sampling at operation 1902 is performed at a sampling rate corresponding to the down-sampling performed at operation 1902. For example, if the down-sampling has been performed at a sampling rate of 1/2 at operation 1902, the up-sampling is performed at a sample rate of 2 at operation 1905. The extraction of the object and assignment of depth to the up-sampled frame is performed by interpolating the result of the extraction of the object and assignment of depth to at least one frame of the first frame group which is adjacent to a frame to which such extraction and assignment is performed. If the interpolation for the up-sampled frames is finished, the 3D content providing apparatus 1 ends the operation 1905.

For example, if the first frame group has been selected by using the degree of importance of the frame at operation 1902, the 3D content providing apparatus 1 performs a tracking operation at operation 1905. The 3D content providing apparatus 1 performs such tracking operation by using the result of the extraction of the object and the assignment of the depth with respect to the first frame group performed at operations 1903 and 1904 to thereby extract the object and assign the depth to the object with respect to the remaining frames. The tracking operation at operation 1905 may be performed similarly to the tracking operation at operation 304. If the tracking of the frames of the 2D content excluding the first frame group has been completed, the 3D content providing apparatus 1 ends the operation 1905.

At operation 1906, the 3D content providing apparatus 1 merges the first frame group to which the extraction of the object and the assignment of depth to the object has been performed, and the frame which has been up-sampled/interpolated or tracked. The merged frame is rendered to generate a 3D content.

As described above, there are provided an apparatus and method for providing high quality 3D contents at low cost.

According to another exemplary embodiment, there are provided an apparatus and method for providing 3D contents, which can promote the content industry and the display industry with an offer of 3D contents.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. A 3D content providing method using a 3D content providing apparatus, the method comprising:
displaying information of a plurality of contents transmitted by the 3D content providing apparatus, to a user terminal;
selecting one of the plurality of contents by a user's input through the user terminal;
displaying on the user terminal 2D-3D conversion quality information available for the selected content based on the information transmitted by the 3D content providing apparatus;
selecting the 2D-3D conversion quality by a user's input through the user terminal; and
transmitting a 3D content of the selected content which has the selected 2D-3D conversion quality from the 3D content providing apparatus to the user terminal.

2. The method according to claim 1, further comprising converting a 2D content of the selected content into the 3D content by the 3D content providing apparatus corresponding to the selected 2D-3D conversion quality.

3. The method according to claim 1, further comprising transmitting the selected content and information of the selected 2D-3D conversion quality from the 3D content providing apparatus to a content converting apparatus;
converting a 2D content of the selected content into the 3D content by the content converting apparatus corresponding to the selected 2D-3D conversion quality; and
receiving the 3D content from the content converting apparatus by the 3D content providing apparatus.

4. The method according to claim 2 or 3, wherein the converting comprises determining a degree of performance of a plurality of conversion processes with different conversion qualities corresponding to the selected 2D-3D conversion quality;
classifying a plurality of frames of the 2D content as a plurality of frame groups corresponding to the plurality of conversion processes based on the determined degree of performance of the plurality of conversion processes; and
performing the plurality of conversion processes to the plurality of classified frame groups.

5. The method according to claim 4, wherein the classifying comprises determining the frame group for which a first conversion process is performed by down-sampling the plurality of frames at a sampling rate corresponding to the degree of performance of the first conversion process among the plurality of conversion processes.

6. The method according to claim 4, wherein the classifying comprises determining the frame group for which the first conversion process is performed, among the plurality of frames based on a degree of importance corresponding to the degree of performance of the first conversion process among the plurality of conversion processes.

7. The method according to claim 4, wherein the performing comprises performing the first conversion process among the plurality of conversion processes with respect to a first frame group among the plurality of frame groups; and
performing a second conversion process with respect to a second frame group among the plurality of frame groups by using a performance result of the first conversion process with respect to the first frame group.

8. The method according to claim 7, wherein the second conversion process comprises interpolation or tracking by using the performance result of the first conversion process.

9. A 3D content providing apparatus which provides a 3D content converted from a 2D content, the apparatus comprising:
a communication unit which communicates with a user terminal; and
a controller which transmits a plurality of content information the user terminal for display, selects one of the plurality of contents by a user's input transmitted by the user terminal, transmits 2D-3D conversion quality information available for the selected content to the user terminal for display, and selects the 2D-3D conversion quality by a user's terminal transmitted by the user terminal to transmit a 3D content of the selected content which has the selected 2D-3D conversion quality.

10. The apparatus according to claim 9, further comprising a converter which converts a 2D content of the selected content into the 3D content corresponding to the selected 2D-3D conversion quality.

11. The apparatus according to claim 9, wherein the controller transmits the selected content and information of the selected 2D-3D conversion quality to a content conversion apparatus, and controls the content converting apparatus to receive the 3D content converted from the 2D content of the selected content corresponding to the selected 2D-3D conversion quality, from the content converting apparatus.

12. The apparatus according to claim 10, wherein the converter determines a degree of performance of a plurality of conversion processes with different conversion qualities corresponding to the selected 2D-3D conversion quality, classifies a plurality of frames of the 2D content as a plurality of frame groups corresponding to the plurality of conversion processes based on the determined degree of performance of the plurality of conversion processes, and performs the plurality of conversion processes with respect to the plurality of classified frame groups.

13. The apparatus according to claim 12, wherein the converter determines the frame group for which a first conversion process is performed by down-sampling the plurality of frames at a sampling rate corresponding to the degree of performance of the first conversion process among the plurality of conversion processes.

14. The apparatus according to claim 12, wherein the converter determines the frame group for which the first conversion process is performed among the plurality of frames based on a degree of importance corresponding to the degree of performance of the first conversion process among the plurality of conversion processes.

15. The apparatus according to claim 12, wherein the converter performs the first conversion process among the plurality of conversion processes with respect to a first frame group among the plurality of frame groups, and performs a second conversion process with respect to a second frame group among the plurality of frame groups by using a performance result of the first conversion process with respect to the first frame group.
